# FASCICULE DE BREVET EUROPEEN

(11) **EP 1 130 737 B1**
(45) Date de publication et mention de la délivrance du brevet: **02.09.2009**
(21) Numéro de dépôt: 01400551.6
(22) Date de dépôt: 02.03.2001
(51) Int. Cl.: H02J 7/14, B60R 16/02

(54) **Installation électrique autonome, notamment pour véhicule automobile**
Autonome elektrische Einrichtung, insbesondere für Fahrzeug
Autonomous electrical installation, especially for vehicle

(30) Priorité: 03.03.2000 FR 0002770
(43) Date de publication de la demande: 05.09.2001
(73) Titulaire: RENAULT S.A.S., 92100 Boulogne Billancourt (FR)
(72) Inventeur: Bogel, Wolfgang, 75014 Paris (FR); Herivault, Robert, 78180 Montigny le Bretonneux (FR); Hiron, Christian, 75014 Paris (FR); Saint-Leger, Gérard, 78000 Versailles (FR)

(56) Documents cités:
- DE-A- 4 226 311
- DE-A- 19 755 050
- DE-A- 19 838 973
- DE-A- 19 846 319
- DE-C- 19 724 356

## Description

La présente invention est relative à une installation d'alimentation d'au moins deux réseaux électriques sur lesquels sont branchés des consommateurs fonctionnant respectivement sous au moins deux tensions continues différentes.

Bien que l'invention n'y soit pas limitée, une telle installation peut trouver une application particulièrement avantageuse dans un véhicule automobile, mais d'autres applications sont également envisageables comme à des équipements fixes ou mobiles à bi-tension tels que les ordinateurs portables, les satellites, etc.

L'évolution de la technologie automobile s'accompagne d'une augmentation en nombre et en puissance des consommateurs électriques et électroniques à bord des véhicules, évolution à laquelle le réseau classique à 12 Volts continus est de moins en moins adapté. Des consommateurs électriques récemment apparus sont par exemple les suspensions actives, le compresseur de climatisation, les soupapes pilotées alimentant le moteur, le dispositif de préchauffage du pot catalytique, le pare-brise chauffant, la direction assistée, la pompe à eau etc. De tels consommateurs peuvent chacun réclamer une puissance valant entre 0,3 et 12 kW en régime de crête et entre 0,1 et 0,8 kW en régime stationnaire.

Pour permettre l'alimentation de ces nombreux et parfois gros consommateurs d'énergie électrique, on a déjà envisagé d'augmenter la tension du réseau de bord, une valeur de 42 Volts paraissant actuellement devenir une valeur plus ou moins standardisée. Une telle augmentation de tension est avantageuse, car elle permet de réduire la section des câbles et de diminuer les intensités des courants à commuter, ce dernier avantage ayant comme corollaire la possibilité d'utiliser des composants semiconducteurs de puissance. Il peut ainsi en résulter une amélioration générale sur le plan de la compacité, du poids, de la fiabilité et des rendements de fonctionnement (alternateur et démarreur par exemple) d'où en définitive une plus faible consommation de carburant.

L'installation d'un réseau de bord à 42 Volts présente cependant un problème, car les consommateurs électriques actuels sont tous conçus pour un réseau d'alimentation à 12 Volts et il n'est pas envisageable industriellement, du moins à court terme, de faire évaluer l'ensemble des équipement électriques des véhicules automobiles vers de plus fortes tensions d'alimentation.

Ainsi, on connaît déjà des installations d'alimentation électrique capables de fournir deux tensions continues.

Par exemple, le US 5 155 374 prévoit deux sources de tension, en l'occurrence à 12 Volts chacune, qui peuvent sélectivement être branchées en série ou en parallèle. Les sources sont une batterie et un supercondensateur. Dans ce cas, le dispositif d'alimentation est essentiellement conçu pour fournir au démarreur du moteur du véhicule la puissance nécessaire sans trop solliciter la batterie.

Au moment du démarrage, un jeu de relais de puissance met en série les deux sources de tension pour alimenter le démarreur en l'occurrence à 24 Volts, c'est-à-dire la somme des tensions des deux sources. Lorsque le moteur a démarré, les deux sources sont alors branchées en parallèle et le supercondensateur peut de nouveau être chargé. Ainsi, cette installation est censée augmenter la durée de vie de la batterie et bien sûr permet de réduire la section des fils du réseau d'alimentation du démarreur.

Cependant, cette installation connue ne permet que très modestement d'atteindre les objectifs visés.

Tout d'abord, la tension aux bornes du démarreur ne sera doublée qu'un très court laps de temps après le début du démarrage. Ensuite, elle chutera très rapidement non seulement par la perte ohmique dans le supercondensateur, mais également en raison de la rapide décharge de ce dernier, pour atteindre la valeur de la tension de la batterie. Celle-ci va donc supporter toute la charge du démarreur bien avant que le moteur n'ait véritablement démarré. Il est même à craindre que le supercondensateur va se charger à l'envers si aucune précaution n'est prise.

Un autre inconvénient de cette installation d'alimentation réside dans le fait que rien n'est prévu pour gérer les courants d'appel, notamment aux moments de la transition entre les branchements en série et en parallèle des deux sources de tension. Ces courants d'appel sont très importants, car le supercondensateur se déchargeant très profondément, la différence de tension entre lui et la batterie sera très élevée, d'où un courant de charge très important au moment de la transition vers le montage en parallèle. La batterie sera donc sollicitée de façon très importante.

D'une façon générale, l'alternateur d'une installation électrique de véhicule automobile est dimensionné et piloté pendant son fonctionnement pour que, lorsque le moteur à combustion interne tourne, il puisse fournir l'énergie et la puissance moyennes nécessaires pour assurer toutes les demandes du réseau du véhicule automobile. En revanche, le système de stockage d'énergie doit assumer deux rôles savoir d'une part celui de "fournisseur de puissance" qui consiste à satisfaire les demandes soudaines de puissance par exemple assurer le démarrage et former un tampon en cas d'autres demandes de puissance soudaines et importantes, et celui d'autre part, de "fournisseur d'énergie" qui consiste à entretenir sur une période plus ou moins prolongée certaines fonctions électriques par exemple lors d'arrêts ponctuels (fonction de redémarrage automatique appelée aussi "stop-and-go") ou prolongés lorsque le véhicule n'est pas utilisé.

Dans le cadre des installations d'alimentation bi-tension, on peut avantageusement réaliser ce partage des types de stockage d'énergie en scindant le système de stockage d'énergie en deux dispositifs de stockage distincts dimensionnés spécifiquement pour le rôle qu'ils ont à jouer, chacun pouvant ainsi être optimisé quant par exemple à son encombrement et à sa durée de vie.

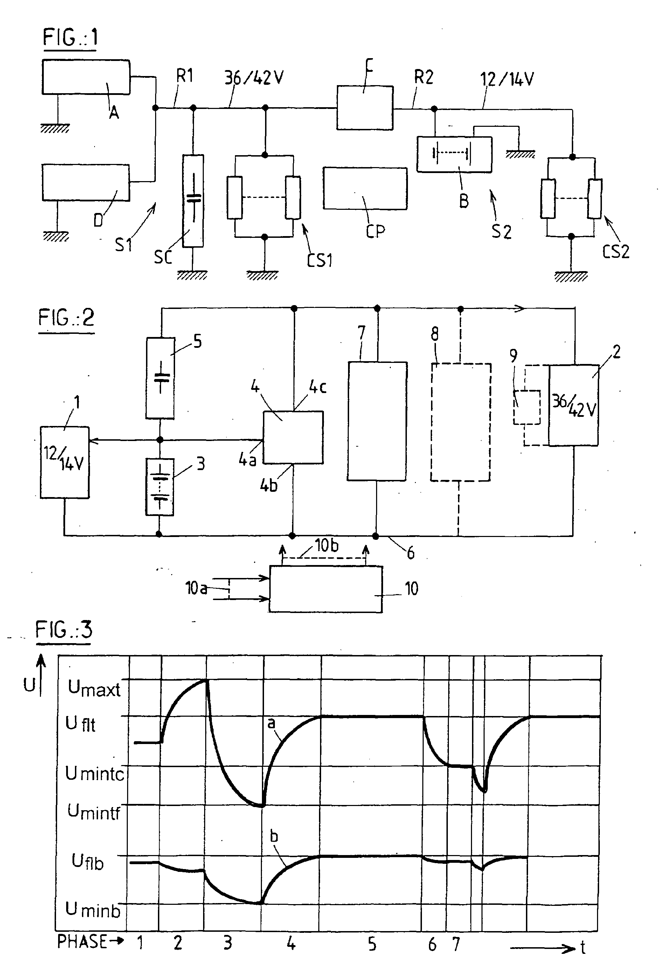

Ainsi, dans une installation d'alimentation bi-tension, il est déjà connu de DE-C-198 46 319 et de DE-A-197 55 050 de prévoir une batterie destinée à fournir l'énergie et un supercondensateur destinée à fournir la puissance. Un schéma d'une installation de ce type est représenté sur la figure 1 des dessins annexés et définit dans le préambule de la revendication 1.

Cette installation connue comprend une section haute tension S1 sous 36/42 Volts par exemple et une section basse tension S2 sous 12/14 Volts par exemple. Ces deux sections sont séparées par un convertisseur continu-continu réversible C, capable de transformer la haute tension en basse tension et inversement.

Dans la section S1 sont prévus l'alternateur A et le démarreur D, ainsi que d'autres consommateurs CS1 demandant des puissances relativement fortes. Le rail de distribution R1 de cette section est sous 36/42 Volts et un supercondensateur SC lui est connecté.

Dans la section S2 sont prévus des consommateurs CS2 de puissance relativement faible et travaillant sous 12/14 Volts. Ils sont branchés sur un rail R2 porté à cette tension et connecté à une batterie B.

L'ensemble est piloté par un calculateur CP.

Dans cette installation, le supercondensateur SC permet de démarrer le véhicule en alimentant en priorité le démarreur et de filtrer les pics de puissance générés par la mise en route de certains gros consommateurs pour éviter les baisses de tension sur le réseau.

La batterie B de son côté peut être dimensionnéé au plus juste pour satisfaire les demandes d'énergie et également pour une durée de vie optimale en réduisant autant que possible sa profondeur de décharge.

L'avantage bien connu des supercondensateurs réside dans le fait qu'ils ne posent pas de problèmes de durée de vie étant dépourvus de matières actives typiques des batteries. Ils ont également une forte puissance spécifique quasi indépendante de la température dans la gamme propre aux exigences automobiles (entre -25° et +65°C).

On sait par ailleurs que les supercondensateurs ne peuvent être utilisés que jusqu'à une tension maximale Uₘₐₓ sous peine de destruction. Cette tension Uₘₐₓ n'est pas absolue mais dépend du temps pendant lequel le supercondensateur y est exposé.

Un supercondensateur présente également une tension "de base" U_{fls} (appelé en anglais "floating voltage") qui est la tension à laquelle il peut être maintenu en permanence sans dégradation. Le supercondensateur peut supporter des tensions supérieures à la tension de base U_{fls} à condition que la durée d'application de la tension soit limitée. Ainsi, une durée d'application d'une seconde de la tension Uₘₐₓ peut généralement être admise.

Par ailleurs, les supercondensateurs sont disponibles dans le commerce sous la forme d'éléments qui ont en général une tension de base de l'ordre de 3,2 Volts de sorte que pour pouvoir en utiliser dans l'installation de la figure 1, il faut monter en série une pluralité de ces éléments. Or, en raison des dispersions de fabrication, les tensions de base U_{fl} des éléments supercondensateurs ne sont pas identiques si bien que, lorsqu'ils sont mis en série, la tension de base totale U_{fls} du montage sera inférieure au multiple correspondant des tensions de base nominales unitaires des éléments avec un facteur d'incertitude d'autant plus important que le nombre d'éléments à utiliser est important. L'utilisation d'un supercondensateur dans une installation d'alimentation du type décrit, pour avantageuse qu'elle soit dans le domaine de la fourniture de puissance électrique, pose donc un problème gênant de sélection des éléments supercondensateurs dont il est formé, ce qui augmente le coût d'une telle installation. Il est par ailleurs évident qu'un nombre élevé d'éléments à utiliser influe également défavorablement sur son prix de revient.

Sous un premier de ses aspects, le problème qui est à la base de l'invention consiste ainsi à rendre optimale l'utilisation des supercondensateurs dans une installation d'alimentation à plusieurs tensions, notamment pour véhicule automobile.

L'installation d'alimentation de la figure 1, connue de la technique antérieure et brièvement décrite ci-dessus, peut être réalisée selon une variante dans laquelle le supercondensateur est remplacé par une batterie d'accumulateurs qui en fait assure les mêmes fonctions et est branchée de la même manière.

Cette solution n'est également pas optimale. Tout d'abord, cette batterie doit comporter le nombre d'éléments nécessaires pour fournir la haute tension requise. On sait par ailleurs que l'un des paramètres importants d'une batterie est son rapport puissance/énergie P/E qui en détermine l'énergie massique et volumique et le prix. On peut dire que l'énergie massique diminue et le prix augmente de façon exponentielle avec l'augmentation du rapport P/E.

Par conséquent, pour dimensionner la batterie par rapport aux exigences de puissance (le plus souvent un démarrage par -20°C), il faut augmenter le rapport P/E tout en respectant également les exigences en matière de la durée de vie déterminée notamment par une faible profondeur de décharge. Pour satisfaire toutes ces exigences en même temps, une utilisation de la batterie de puissance comme dans l'installation de la figure 1 ne conduit pas à un compromis satisfaisant.

Sous un autre de ses aspects, le problème qui est à la base de l'invention consiste ainsi à proposer un meilleur compromis quant à l'utilisation de batteries comme sources de puissance dans une installation d'alimentation à plusieurs tensions, notamment pour véhicule automobile.

L'invention a pour but de résoudre le problème énoncé ci-dessus sous ses deux aspects.

Elle a donc pour objet une installation électrique autonome comprenant
- au moins deux réseaux électriques qui sont alimentés respectivement sous au moins une basse tension continue et au moins une haute tension continue et auxquels sont raccordés des consommateurs électriques;
- au moins des premier et deuxième dispositifs de stockage d'énergie électrique raccordés respectivement auxdits réseaux;
- au moins une machine productrice d'électricité raccordée à l'un desdits réseaux,
- au moins un convertisseur réversible continu/continu connecté auxdits dispositifs de stockage d'énergie électrique et à ladite machine productrice d'électricité et présentant une borne commune, une borne basse tension et une borne haute tension, et
- un calculateur électronique de pilotage dudit convertisseur et de ladite machine productrice d'électricité, pour commander sélectivement le sens de conversion dudit convertisseur en fonction de la consommation électrique imposée auxdits réseaux par lesdits consommateurs, pour déterminer l'état de charge de chacun desdits dispositifs de stockage d'énergie électrique en utilisant, selon le cas, l'énergie électrique fournie par ladite machine productrice d'électricité et/ou au moins l'un desdits dispositifs de stockage d'énergie électrique,
   caractérisée en ce que
- lesdits dispositifs de stockage d'énergie électrique sont connectés selon un montage en série dont le point intermédiaire est raccordé à ladite borne commune dudit convertisseur et à un côté du réseau basse tension, dont une première extrémité est connectée en commun auxdits réseaux et à ladite borne basse tension du convertisseur et dont une seconde extrémité est connectée au réseau haute tension et ladite borne haute tension du convertisseur.

Grâce à ces caractéristiques, les dispositifs de stockage d'énergie peuvent être dimensionnés de façon optimale.

Selon une autre caractéristique de l'invention, le dispositif de stockage raccordé au réseau basse tension est une batterie et en ce que le dispositif de stockage raccordé au réseau haute tension est un supercondensateur.

Etant donné qu'ainsi la tension du supercondensateur vient compléter celle de la batterie jusqu'à concurrence de la tension du réseau haute-tension, il devient possible de réduire à un nombre minimal les éléments du supercondensateur et ainsi, de simplifier la structure et de faciliter le montage de ce supercondensateur.

Selon une autre caractéristique de l'invention, lesdits dispositifs de stockage d'énergie électrique sont des batteries.

Cette caractéristique permet également de réduire la taille du second dispositif de stockage d'énergie dont la tension totale ne doit également que compléter celle fournie par le premier dispositif de stockage d'énergie, jusqu'à former avec ce dernier la tension sous laquelle doit fonctionner le réseau haute tension.

Avantageusement, lesdites batteries forment un ensemble unitaire, grâce à quoi l'encombrement des batteries est minimal, leurs caractéristiques peuvent être choisies en fonction de l'importance des consommateurs branchés respectivement sur les réseaux haute et basse tension, et leur durée de vie peut être maximale.

L'invention a également pour objet un véhicule automobile équipé d'un moteur à combustion interne et d'un démarreur couplé mécaniquement à ce dernier, caractérisé en ce qu'il comprend une installation électrique présentant l'une ou plusieurs des caractéristiques telles que définies ci-dessus.

Dans ce cas, selon deux variantes possibles de l'invention, le démarreur peut être un consommateur soit du réseau haute tension, soit du réseau basse tension.

Si le démarreur est, de façon connue en soi, réalisé sous la forme d'une machine combinée comprenant également ladite machine productrice d'électricité, il est possible selon une autre caractéristique de l'invention, que ladite machine combinée soit connectée dans ledit réseau haute tension.

L'invention a encore pour objet un procédé pour la mise en oeuvre d'une installation électrique autonome dans un véhicule, caractérisé en ce qu'il consiste, lors du démarrage dudit moteur à combustion interne,
- à fixer des premier et second niveaux de tensions admissibles respectivement maximale et minimale sur ledit réseau haute tension et un troisième niveau de tension admissible minimale sur ledit réseau basse tension;
- à commander ledit convertisseur pour précharger ledit second dispositif de stockage d'énergie à partir dudit premier dispositif de stockage d'énergie jusqu'à ce que la tension dudit réseau haute tension atteigne au moins une valeur suffisante pour le démarrage;
- à déclencher ledit démarreur;
- et, pendant le fonctionnement du démarreur, à maintenir la tension dudit réseau haute tension à une valeur au moins égale audit second niveau de tension, en complétant au besoin la charge dudit second dispositif de stockage d'énergie à partir dudit premier dispositif de stockage d'énergie par l'intermédiaire dudit convertisseur;
- et à interrompre le démarrage, le cas échéant, si la tension sur ledit réseau basse tension diminue jusqu'audit troisième niveau de tension.

Selon d'autres caractéristiques avantageuses de ce procédé:
- ladite opération de précharge consiste à charger ledit second dispositif de stockage d'énergie jusqu'à la valeur de tension maximale admissible à laquelle peut être soumis ledit second dispositif de stockage d'énergie;
- en régime de fonctionnement dudit moteur à combustion interne, les tensions sur lesdites réseaux basse et haute tension sont régulées aux valeurs respectives de base desdits dispositifs de stockage d'énergie;
- dans le cas où le véhicule est équipé d'un système de redémarrage automatique, il consiste:
   à fixer une valeur à respecter pour la tension minimale dudit réseau haute tension en fonction de la température de fonctionnement dudit moteur à combustion interne, et
   à l'arrêt provisoire du véhicule, moteur stoppé, à réduire progressivement la tension dudit réseau haute tension jusqu'à ce que ladite valeur à respecter de tension soit atteinte, par transfert d'énergie dudit premier dispositif de stockage vers le second par l'intermédiaire dudit convertisseur.

D'autres caractéristiques et avantages de la présente invention apparaîtront au cours de la description qui va suivre, donnée uniquement à titre d'exemple et faite en se référant aux dessins annexés sur lesquels:
- la figure 1 déjà décrite est un schéma d'une installation d'alimentation bi-tension selon la technique antérieure;
- la figure 2 est un schéma d'un premier mode de réalisation d'une installation d'alimentation selon l'invention;
- la figure 3 est un diagramme des temps illustrant le fonctionnement de l'installation d'alimentation selon l'invention; et
- les figures 4 et 4A illustrent deux variantes d'un second mode de réalisation selon l'invention.

On va d'abord se référer à la figure 2 qui représente un premier mode de réalisation de l'invention. Selon cet exemple, l'installation est destinée à assurer l'alimentation électrique d'un véhicule automobile, mais les spécialistes comprendront aisément que d'autres applications de cette installation sont envisageables dans la mesure où une telle application nécessite la fourniture d'énergie électrique à des charges dont certaines fonctionnent sous une première tension relativement basse et d'autres sous une seconde tension relativement haute.

Sur la figure 2, les réseaux auxquels sont raccordés les consommateurs ou charges, sont représentés par les blocs 1 et 2, le réseau 1 fonctionnant sous une tension relativement basse de 12/14 Volts par exemple, et le réseau 2 sous une tension relativement haute de 36/42 Volts par exemple, ces valeurs n'étant évidemment pas limitatives, encore qu'elles soient admises généralement dans la technologie automobile et conviennent donc bien dans cette application. On notera que les valeurs 12 et 36 Volts représentent la tension Un des dispositifs de stockage d'énergie utilisés et que les valeurs 14 et 42 Volts en représentent la tension Uₘₐₓ.

L'installation d'alimentation comprend un premier dispositif 3 de stockage d'énergie électrique aux bornes duquel est connecté le réseau 1. Ce premier dispositif de stockage d'énergie est également connecté entre une borne commune 4a et une borne basse tension 4b d'un convertisseur réversible 4 continu/continu.

L'installation d'alimentation selon l'invention comprend également un second dispositif 5 de stockage d'énergie électrique qui est connecté en série avec le premier dispositif 3 de stockage d'énergie et dont la borne opposée à ce dernier est connectée au réseau 2 à haute tension et à la borne haute tension 4c du convertisseur 4. On remarquera que les deux réseaux 1 et 2 ont une borne commune 6 qui est de préférence la masse de l'installation.

L'installation d'alimentation comprend encore un dispositif 7 générateur d'énergie électrique. Dans l'application de l'installation à un véhicule automobile, ce dispositif générateur 7 peut être une seule machine électrique faisant office sélectivement d'alternateur (associé à un redresseur) et de démarreur. Toutefois, selon une variante qui est suggérée en traits mixtes sur la figure 2, on peut également prévoir un alternateur 8 (également associé à un redresseur) en tant que machine distincte, cas dans lequel il est prévu un démarreur 9 également distinct faisant alors partie des charges du réseau électrique 2.

L'installation comprend enfin un calculateur symbolisé par le bloc 10 et conçu pour gérer et piloter l'ensemble du fonctionnement de l'installation. Ce calculateur présente une série d'entrées 10a et une série de sortie 10b fonctionnellement reliées à divers capteurs et organes de l'installation pour permettre l'accomplissement de sa tâche. Ses connexions n'ont pas été dessinées par soucis de simplification.

Les entrées 10a reçoivent par exemple les signaux représentant les paramètres suivants:
- la tension et la température du dispositif 3 de stockage basse tension de l'installation;
- la tension et la température du dispositif 5 de stockage haute tension;
- la température du moteur à combustion interne (non représenté) du véhicule;
- l'état du démarreur 9 et de l'alternateur 8 ou de la machine 7 faisant office à la fois de démarreur et d'alternateur;
- l'état du convertisseur 4;
- l'état de la clé de contact (non représentée);
- l'intensité des courants traversant respectivement les dispositifs de stockage 3 et 5;
- l'état de charge des deux dispositifs de stockage 3 et 5.

Les sorties 10b délivrent les signaux représentant par exemple les paramètres suivants:
- la tension et la puissance de sortie de l'alternateur 8 ou de la machine combinée 7;
- la mise en marche du démarreur 9 ou de la machine combinée 7;
- le sens de fonctionnement du convertisseur 4;
- les puissances de sortie dans les deux sens du convertisseur 4;
- l'allumage d'un voyant sur le tableau de bord du véhicule (non représenté).

Dans le mode de réalisation de la figure 2, le premier dispositif 3 de stockage d'énergie électrique est une batterie d'accumulateurs classique délivrant 12/14 Volts. Elle est dimensionnée de manière à pouvoir assumer son rôle de source d'énergie au sens exposé ci-dessus. Le second dispositif 5 de stockage d'énergie est un supercondensateur dont le nombre d'éléments supercondensateurs en série est choisi pour que l'ensemble délivre une tension de 24/28 Volts c'est-à-dire le complément par rapport à la basse tension, permettant d'atteindre la haute tension. Par conséquent, par rapport au circuit de la figure 1, ce dispositif de stockage peut être réalisé avec moins d'éléments et présente moins de problèmes de sélection pour fixer la tension qu'il délivre.

Le fonctionnement de l'installation de la figure 2 va maintenant être décrit dans son application à un véhicule automobile, en se référant plus particulièrement à la figure 3 qui représente en fonction du temps, par la courbe a, la tension Uₜₒₜ présente aux bornes du montage en série des deux dispositifs de stockage d'énergie 3 et 5, et par la courbe b, celle U_{bat} présente aux bornes de la batterie 3.

Quant le véhicule est abandonné pendant un temps relativement long pouvant atteindre plusieurs semaines, la batterie 3 et le supercondensateur 5 ont adopté leurs tensions "d'abandon" liées aux relaxations, à la température et à l'autodécharge, la tension Uₜₒₜ étant descendue en dessous de la tension de base totale U_{flt} des deux dispositifs de stockage. Le convertisseur 4 isole alors l'un de l'autre ces deux dispositifs (phase 1 du diagramme de la figure 3).

Le calculateur 10 sera réveillé à la première action du conducteur du véhicule, par exemple par l'action sur la télécommande d'ouverture des portes ou toute autre manifestation de la proximité de la télécommande par rapport au véhicule.

Avant la phase de démarrage, le calculateur 10 mesure la tension Uₜₒₜ effectivement présente et la tension U_{bat}, valeurs dont il déduit la tension Uₛ aux bornes du supercondensateur 5 par l'opération Uₛ = Uₜₒₜ - U_{bat}.

Le calculateur 10 disposant également de la température du moteur du véhicule, il calcule à l'aide d'un champ de caractéristiques mémorisé, la puissance nécessaire au démarrage et en déduit la tension que doit fournir le supercondensateur pendant le démarrage. Si la tension Us est inférieure à la tension exigée, (cas représenté dans le diagramme), le calculateur commande le convertisseur 4 pour qu'il assure la conversion dans le sens 12/14 Volts → 36/42 Volts pour charger le supercondensateur à l'aide de l'énergie tirée de la batterie 3, jusqu'à ce que la tension Uₜₒₜ atteigne la valeur nécessaire. Avantageusement, cette charge du supercondensateur peut être effectuée jusqu'à la tension Uₘₐₓₜ qui est la tension totale maximale pouvant être admise aux bornes du montage en série, car le démarrage qui va suivre immédiatement provoquera une baisse immédiate de cette tension évitant ainsi un endommagement du supercondensateur (phase 2 du diagramme). Un voyant sur le tableau de bord du véhicule peut indiquer cette période de charge.

Quand la tension Uₘₐₓₜ est atteinte, le calculateur 4 déclenche la procédure de démarrage en commandant le démarreur 8 ou 9 (phase 3 du diagramme).

Le calculateur 4 est également programmé pour surveiller plusieurs niveaux de tension à savoir:
U_{minb} qui est la tension minimale admissible aux bornes de la batterie 3;
U_{mintf} qui est la tension totale minimale admissible aux bornes du montage en série lorsque le moteur du véhicule est froid; et
U_{mintc} qui est la tension minimale admissible aux bornes du montage en série lorsque le moteur du véhicule est chaud.

La phase de démarrage 3 va se poursuivre soit jusqu'à ce que le moteur démarre, soit jusqu'à ce que, pour des raisons de protection des dispositifs de stockage, l'une ou l'autre des tensions minimales soit atteinte. Le calculateur 4 peut également surveiller d'autres critères de sécurité et suspendre le processus de démarrage si un tel critère n'est pas satisfait. Il est à noter que pendant la phase 3, le convertisseur 4 est désactivé.

Lorsqu'à la fin de la phase 3, le moteur du véhicule est lancé, le calculateur 4 active l'alternateur 7 ou 8 et commande la recharge du supercondensateur 5 jusqu'à sa propre tension de base U_{fls}.

Par ailleurs, par l'intermédiaire du convertisseur 4 activé par le calculateur dans le sens 36/42 Volts → 12/14 Volts, l'alternateur charge la batterie 3 à sa tension de base U_{flb}, cette phase de charge (phase 4 du diagramme) s'achevant lorsque la tension Uₜₒₜ a atteint la valeur de la tension de base totale U_{flt}. Dès le début de cette phase 4, le réseau basse tension 1 est alimenté par le convertisseur 4 et le réseau haute tension 2 par l'alternateur 7 ou 8 et cette configuration sera maintenue tout au long du fonctionnement du véhicule symbolisé par la phase 5. Le calculateur 10 règle l'alternateur pour qu'il fournisse la puissance nécessaire à la recharge des dispositifs de stockage et à l'alimentation des consommateurs des réseaux 1 et 2.

La recharge des dispositifs de stockage 3 et 5 est effectuée de telle manière qu'ils soient en permanence maintenus à leurs tensions de base respectives Uflb et Ufls.

Au début de la phase 6, il est supposé que le véhicule s'est arrêté momentanément par exemple à un feu rouge. Au bout d'un intervalle de temps prédéterminé, le calculateur 10 commande l'arrêt du moteur. Il en résulte une réduction de la tension dans les deux réseaux 1 et 2, celle du réseau 1 étant la plus sensible, car avantageusement, les charges du réseau haute tension 2 sont délestées, étant donné qu'elles représentent majoritairement des consommateurs qui ne sont pas indispensables pour le fonctionnement du véhicule ou pour le maintien des conditions de sécurité. En tout état de cause, il est fait en sorte que la réduction de tension sur les réseaux soit le moins perceptible possible pour les occupants du véhicule. Pour cela, il est souhaitable que toute chute brutale de la tension soit évitée.

De préférence, le calculateur 10, en examinant la température du moteur, peut déterminer, par exemple à l'aide d'un champ de caractéristiques en mémoire, une valeur de tension en deçà de laquelle le moteur ne pourrait démarrer à la température considérée. Le calculateur 10 commande les délestages de charges de telle façon que la tension, d'une part suive une courbe prédéterminée, par exemple celle représentée pour la phase 6 de la figure 3 assurant une réduction graduelle non perceptible de la tension, et d'autre part ne descende pas en-dessous de la valeur de tension U_{mintc}.

En outre, le calculateur 10 commande le convertisseur 4 afin qu'il envoie de l'énergie présente sur le réseau 2 vers le réseau 1, de façon à amortir également la chute de tension dans le réseau 1, dans lequel, comme déjà précisé, sont insérés les consommateurs indispensables au bon fonctionnement, comme le calculateur lui-même ou les phares par exemple.

Au cours de la phase 7 suivante, le véhicule est encore à l'arrêt, l'installation ne prélève plus d'énergie sur le réseau haute tension, de sorte que le dispositif de stockage basse tension 3 se décharge progressivement en alimentant les consommateurs branchés sur le réseau basse tension 1.

Dès que le conducteur du véhicule se manifeste pour avancer de nouveau, le moteur est redémarré en passant par les phases 3, 4 et 5 déjà décrites.

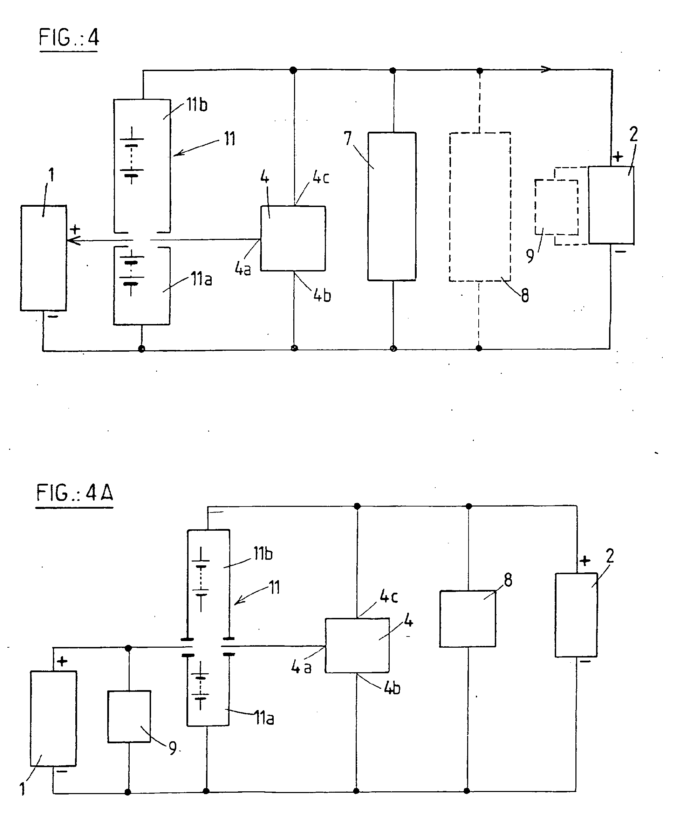

La figure 4 représente une variante de l'invention dans laquelle les deux dispositifs de stockage forment une seule unité de stockage d'énergie 11 composée, selon un montage en série, d'une section d'accumulateurs 11a à basse tension (12/14 Volts par exemple) et d'une section d'accumulateurs llb haute tension (24/28 Volts, par exemple).

Dans le cas de la figure 4, il est supposé qu'un alternateur/démarreur combiné 7 ou un alternateur 8 et un démarreur 9 distincts sont branchés sur la haute tension, à l'instar du mode de réalisation de la figure 2. Dans ce cas, les deux sections 11a et llb de l'unité de batterie 11 seront homogènes sur le plan de leur construction.

En revanche, si conformément à la figure 4A qui représente en tant qu'unité de stockage un même agencement que celui de la figure 4, le démarreur 9 est relié au réseau basse tension 1, la section 11a sera dimensionnée pour pouvoir fournir une puissance suffisante pour alimenter ce démarreur, la section llb pouvant être dimensionnée plus légèrement pour, de façon optimale, pouvoir maintenir la haute tension sur le réseau 2.

L'invention n'est pas limitée aux modes de réalisation décrits et représentés. C'est ainsi par exemple que l'on pourrait envisager d'alimenter plus de deux réseaux ayant chacun une tension propre différente et associé à un dispositif de stockage d'énergie dimensionné de façon optimale pour le niveau d'énergie ou de puissance à fournir instantanément ou en continu à leur réseau correspondant.

## Revendications

1. Installation électrique autonome comprenant :
- au moins deux réseaux électriques (1, 2) qui sont alimentés respectivement sous au moins une basse tension continue et au moins une haute tension continue et auxquels sont raccordés des consommateurs électriques;
- au moins des premier et deuxième dispositifs de stockage d'énergie électrique (3, 5; 11a, 11b) raccordés respectivement auxdits réseaux (1, 2);
- au moins une machine productrice d'électricité (7; 8) raccordée à l'un desdits réseaux (2),
- au moins un convertisseur réversible continu/continu (4) connecté auxdits dispositifs de stockage d'énergie électrique (3, 5; 11a, 11b) et à ladite machine productrice d'électricité (7; 8) et présentant une borne commune (4a), une borne basse tension (4b) et une borne haute tension (4c), et
- un calculateur électronique (10) de pilotage dudit convertisseur (4) et de ladite machine productrice d'électricité (7; 8), pour commander sélectivement le sens de conversion dudit convertisseur (4) en fonction de la consommation électrique imposée auxdits réseaux (1, 2) par lesdits consommateurs, pour déterminer l'état de charge de chacun desdits dispositifs de stockage d'énergie électrique (3, 5; 11a, 11b) en utilisant, selon le cas, l'énergie électrique fournie par ladite machine productrice d'électricité (7; 8) et/ou au moins l'un desdits dispositifs de stockage d'énergie électrique (3, 5; 11a, 11b),
**caractérisée en ce que**
- lesdits dispositifs de stockage d'énergie électrique (3, 5; 11a, 11b) sont connectés selon un montage en série dont le point intermédiaire est raccordé à ladite borne commune (4a) dudit convertisseur (4) et à un côté du réseau basse tension et dont une première extrémité (6) est connectée en commun auxdits réseaux (1, 2) et à ladite borne basse tension (4b) du convertisseur (4) et dont une seconde extrémité est connectée au réseau haute tension (2) et à ladite borne haute tension (4c) du convertisseur (4).

2. Installation électrique autonome suivant la revendication 1, **caractérisée en ce que** le dispositif de stockage (4) raccordé au réseau basse tension (1) est une batterie et **en ce que** le dispositif de stockage (5) raccordé au réseau haute- tension (2) est un supercondensateur.

3. Installation électrique autonome suivant la revendication 1, **caractérisée en ce que** lesdits dispositifs de stockage d'énergie électrique (11) sont des batteries (11a, 11b).

4. Installation électrique autonome suivant la revendication 3, **caractérisée en ce que** lesdites batteries (11a, 11b) forment un ensemble unitaire (11).

5. Véhicule automobile équipé d'un moteur à combustion interne et d'un démarreur (7; 9) couplé mécaniquement à ce dernier, **caractérisé en ce qu'**il comprend une installation électrique selon l'une quelconque des revendications 1 à 4.

6. Véhicule automobile suivant la revendication 5,
**caractérisé en ce que** le démarreur (9) est un consommateur du réseau haute tension (2).

7. Véhicule automobile suivant la revendication 5,
**caractérisé en ce que** le démarreur (9) est un consommateur du réseau basse tension (1).

8. Véhicule automobile suivant la revendication 5,
**caractérisé en ce que** le démarreur étant réalisé sous la forme d'une machine combinée (7) comprenant également ladite machine productrice d'électricité, ladite machine combinée (7) est connectée dans ledit réseau haute tension (2).

9. Procédé pour la mise en oeuvre d'une installation électrique autonome dans un véhicule suivant l'une quelconque des revendications 5 et 6, **caractérisé en ce qu'**il consiste, lors du démarrage à froid dudit moteur à combustion interne,
- à fixer des premier et second niveaux de tensions admissibles respectivement maximale (Uₘₐₓₜ) et minimale (U_{mintf}) sur ledit réseau haute tension (2) et un troisième niveau de tension (Uₘᵢₙₜ) admissible minimale sur ledit réseau basse tension (2);
- à commander ledit convertisseur (4) pour précharger ledit second dispositif de stockage d'énergie (5; 11b) à partir dudit premier dispositif de stockage d'énergie (3; 11a) jusqu'à ce que la tension dudit réseau haute tension (2) atteigne au moins une valeur suffisante pour le démarrage;
- à déclencher ledit démarreur (8; 9);
- et, pendant le fonctionnement du démarreur (8; 9), à maintenir la tension dudit réseau haute tension à une valeur au moins égale audit second niveau de tension (U_{mintf}), en complétant au besoin la charge dudit second dispositif de stockage d'énergie (5;11b) à partir dudit premier dispositif de stockage d'énergie (3; 11a) par l'intermédiaire dudit convertisseur (4);
- et à interrompre le démarrage, le cas échéant, si la tension sur ledit réseau basse tension (2) atteigne ledit troisième niveau de tension (U_{minb}).

10. Procédé suivant la revendication 9, **caractérisé en ce que** ladite opération de précharge consiste à charger ledit second dispositif de stockage d'énergie (5; 11b) jusqu'à la valeur de tension maximale admissible (Uₘₐₓₜ) à laquelle peut être soumis ledit second dispositif de stockage d'énergie (5; 11b).

11. Procédé suivant l'une quelconque des revendications 9 et 10, **caractérisé en ce qu'**en régime de fonctionnement dudit moteur à combustion interne les tensions sur lesdites réseaux basse et haute tension (1, 2) sont régulées aux valeurs respectives de base (U_{flb}, U_{fls}) desdits dispositifs de stockage d'énergie.

12. Procédé suivant l'une quelconque des revendications 9 à 11, **caractérisé en ce que**, dans le cas où le véhicule est équipé d'un système de redémarrage automatique, il consiste,
à fixer une valeur (U_{mintc}) à respecter pour la tension minimale dudit réseau haute tension (2) en fonction de la température de fonctionnement dudit moteur à combustion interne, et
à l'arrêt provisoire du véhicule, moteur stoppé, à réduire progressivement la tension dudit réseau haute tension (2) jusqu'à ce que ladite valeur à respecter de tension (U_{mintc}) soit atteinte, par transfert d'énergie dudit premier dispositif de stockage (3; 11a) vers le second (5; 11b) par l'intermédiaire dudit convertisseur (4).

## Claims

1. Stand-alone electrical installation comprising:
- at least two electrical networks (1, 2) which are powered respectively at at least one low DC voltage and at least one high DC voltage and to which electrical consumers are connected;
- at least first and second electrical energy storage devices (3, 5; 11a, 11b) respectively connected to said networks (1, 2);
- at least one electricity-producing machine (7; 8) connected to one of said networks (2),
- at least one reversible DC/DC converter (4) connected to said electrical energy storage devices (3, 5; 11a, 11b) and to said electricity-producing machine (7; 8) and having a common terminal (4a), a low voltage terminal (4b) and a high voltage terminal (4c), and
- an electronic computer (10) driving said converter (4) and said electricity-producing machine (7; 8), to selectively control the direction of conversion of said converter (4) according to the electrical consumption imposed on said networks (1, 2) by said consumers, to determine the state of charge of each of said electrical energy storage devices (3, 5; 11a, 11b) by using, depending on the case, the electrical energy supplied by said electricity-producing machine (7; 8) and/or at least one of said electrical energy storage devices (3, 5; 11a, 11b),
**characterized in that**
- said electrical energy storage devices (3, 5; 11a, 11b) are connected according to a series configuration, the intermediate point of which is connected to said common terminal (4a) of said converter (4) and to one side of the low voltage network, and of which a first end (6) is connected in common to said networks (1, 2) and to said low voltage terminal (4b) of the converter (4) and of which a second end is connected to the high voltage network (2) and to said high voltage terminal (4c) of the converter (4).

2. Stand-alone electrical installation according to Claim 1, **characterized in that** the storage device (4) connected to the low voltage network (1) is a battery and **in that** the storage device (5) connected to the high voltage network (2) is a supercapacitor.

3. Stand-alone electrical installation according to Claim 1, **characterized in that** said electrical energy storage devices (11) are batteries (11a, 11b).

4. Stand-alone electrical installation according to Claim 3, **characterized in that** said batteries (11a, 11b) form a single set (11).

5. Motor vehicle equipped with an internal combustion engine and a starter (7; 9) mechanically coupled to the latter, **characterized in that** it comprises an electrical installation according to any one of Claims 1 to 4.

6. Motor vehicle according to Claim 5, **characterized in that** the starter (9) is a consumer of the high voltage network (2).

7. Motor vehicle according to Claim 5, **characterized in that** the starter (9) is a consumer of the low voltage network (1).

8. Motor vehicle according to Claim 5, **characterized in that**, with the starter being produced in the form of a combined machine (7) also including said electricity-producing machine, said combined machine (7) is connected in said high voltage network (2).

9. Method for setting up a stand-alone electrical installation in a vehicle according to either of Claims 5 and 6, **characterized in that** it consists, on starting said internal combustion engine from cold,
- in setting first and second respectively maximum (Uₘₐₓₜ) and minimum (U_{mintf}) allowable voltage levels on said high voltage network (2) and a third minimum allowable voltage level (Uₘᵢₙₜ) on said low voltage network (2);
- in controlling said converter (4) to precharge said second energy storage device (5; 11b) from said first energy storage device (3; 11a) until the voltage of said high voltage network (2) reaches at least one sufficient value to start;
- in triggering said starter (8; 9);
- and, while the starter (8; 9) is operating, in maintaining the voltage of said high voltage network at a value at least equal to said second voltage level (U_{mintf}) , by topping up as required the charge of said second energy storage device (5; 11b) from said first energy storage device (3; 11a) through said converter (4) ;
- and in interrupting the starting, as appropriate, if the voltage on said low voltage network (2) reaches said third voltage level (U_{minb}).

10. Method according to Claim 9, **characterized in that** said precharging operation consists in charging said second energy storage device (5; 11b) to the maximum allowable voltage value (Uₘₐₓₜ) to which said second energy storage device (5; 11b) can be subjected.

11. Method according to either of Claims 9 and 10, **characterized in that**, at the operating speed of said internal combustion engine, the voltages on said low and high voltage networks (1, 2) are regulated to the respective basic values (U_{flb}, U_{fls}) of said energy storage devices.

12. Method according to any one of Claims 9 to 11, **characterized in that**, in the case where the vehicle is equipped with an automatic restart system, it consists, in setting a value (U_{mintc}) to be observed for the minimum voltage of said high voltage network (2) according to the operating temperature of said internal combustion engine, and in temporarily stopping the vehicle, with the engine stopped, to gradually reduce the voltage of said high voltage network (2) until said voltage value to be observed (U_{mintc}) is reached, by energy transfer from said first storage device (3; 11a) to the second (5; 11b) through said converter (4).

## Patentansprüche

1. Autonome elektrische Anlage, mit:
- wenigstens zwei elektrischen Netzen (1, 2), die unter wenigstens einer Nieder-Gleichspannung bzw. unter wenigstens einer Hoch-Gleichspannung gespeist werden und mit denen elektrische Verbraucher verbunden sind;
- wenigstens einer ersten und einer zweiten Vorrichtung (3, 5; 11a, 11b) zum Speichern elektrischer Energie, die mit den Netzen (1, 2) entsprechend verbunden sind;
- wenigstens einer Elektrizität erzeugenden Maschine (7; 8), die mit einem der Netze (2) verbunden ist,
- wenigstens einem reversiblen Gleichstrom/ Gleichstrom-Wandler (4), der mit den Vorrichtungen (3, 5; 11a, 11b) zum Speichern elektrischer Energie und mit der Elektrizität erzeugenden Maschine (7; 8) verbunden ist und einen gemeinsamen Anschluss (4a), einen Niederspannungsanschluss (4b) und einen Hochspannungsanschluss (4c) aufweist, und
- einem elektronischen Rechner (10) zur Steuerung des Wandlers (4) und der Elektrizität erzeugenden Maschine (7; 8), um den Umwandlungsrichtungssinn des Wandlers (4) als Funktion des elektrischen Verbrauchs, mit dem die Netze (1, 2) durch die Verbraucher beaufschlagt werden, wahlweise zu steuern, um den Ladezustand jeder der Vorrichtungen (3, 5; 11a, 11b) zum Speichern elektrischer Energie unter Verwendung je nach Fall der elektrischen Energie, die von der Elektrizität erzeugenden Maschine (7; 8) und/oder von wenigstens einer der Vorrichtungen (3, 5; 11a, 11b) zum Speichern elektrischer Energie geliefert wird, zu bestimmen,
**dadurch gekennzeichnet, dass**
- die Vorrichtungen (3, 5; 11a, 11b) zum Speichern elektrischer Energie in einer Reihenschaltung verbunden sind, deren Zwischenpunkt mit dem gemeinsamen Anschluss (4a) des Wandlers (4) und mit einer Seite des Niederspannungsnetzes verbunden ist, deren erstes Ende (6) sowohl mit den Netzen (1, 2) als auch mit dem Niederspannungsanschluss (4b) des Wandlers (4) verbunden ist und deren zweites Ende mit dem Hochspannungsnetz (2) und mit dem Hochspannungsanschluss (4c) des Wandlers (4) verbunden ist.

2. Autonome elektrische Anlage nach Anspruch 1,
**dadurch gekennzeichnet, dass** die Speichervorrichtung (4), die mit dem Niederspannungsnetz (1) verbunden ist, eine Batterie ist und dass die Speichervorrichtung (5), die mit dem Hochspannungsnetz (2) verbunden ist, ein Superkondensator ist.

3. Autonome elektrische Anlage nach Anspruch 1,
**dadurch gekennzeichnet, dass** die Vorrichtungen (11) zum Speichern elektrischer Energie Batterien (11a, 11b) sind.

4. Autonome elektrische Anlage nach Anspruch 3,
**dadurch gekennzeichnet, dass** die Batterien (11a, 11b) eine Einheitsanordnung (11) bilden.

5. Kraftfahrzeug, das mit einer Brennkraftmaschine und mit einem Anlasser (7; 9), der mit dieser Letzteren mechanisch gekoppelt ist, ausgerüstet ist, **dadurch gekennzeichnet, dass** es eine elektrische Anlage nach einem der Ansprüche 1 bis 4 enthält.

6. Kraftfahrzeug nach Anspruch 5, **dadurch gekennzeichnet, dass** der Anlasser (9) ein Verbraucher des Hochspannungsnetzes (2) ist.

7. Kraftfahrzeug nach Anspruch 5, **dadurch gekennzeichnet, dass** der Anlasser (9) ein Verbraucher des Niederspannungsnetzes (1) ist.

8. Kraftfahrzeug nach Anspruch 5, **dadurch gekennzeichnet, dass** der Anlasser in Form einer kombinierten Maschine (7) verwirklicht ist, die außerdem die Elektrizität erzeugenden Maschine enthält, wobei die kombinierte Maschine (7) in das Hochspannungsnetz (2) geschaltet ist.

9. Verfahren zum Betreiben einer autonomen elektrischen Anlage in einem Fahrzeug nach einem der Ansprüche 5 und 6, **dadurch gekennzeichnet, dass** es beim Kaltstart der Brennkraftmaschine darin besteht:
- einen ersten und einen zweiten annehmbaren maximalen (Uₘₐₓₜ) bzw. minimalen (U_{mintf}) Spannungspegel in dem Hochspannungsnetz (2) und einen dritten annehmbaren minimalen Spannungspegel (Uₘᵢₙₜ) in dem Niederspannungsnetz (2) festzulegen;
- den Wandler (4) zu steuern, um die zweite Energiespeichervorrichtung (5; 11b) anhand der ersten Energiespeichervorrichtung (3; 11a) vorzuladen, bis die Spannung des Hochspannungsnetzes (2) wenigstens einen ausreichenden Wert zum Anlassen erreicht;
- den Anlasser (8; 9) zu starten;
- und während des Betriebs des Anlassers (8; 9) die Spannung des Hochspannungsnetzes auf einem Wert zu halten, der wenigstens gleich dem zweiten Spannungspegel (U_{mintf}) ist, indem bei Bedarf die Ladung der zweiten Energiespeichervorrichtung (5; 11b) anhand der ersten Energiespeichervorrichtung (3; 11a) über den Wandler (4) ergänzt wird;
- und das Anlassen gegebenenfalls zu unterbrechen, falls die Spannung im Niederspannungsnetz (2) den dritten Spannungspegel (U_{minb}) erreicht.

10. Verfahren nach Anspruch 9, **dadurch gekennzeichnet, dass** die Vorladeoperation darin besteht, die zweite Energiespeichervorrichtung (5; 11b) bis zu dem Wert der annehmbaren maximalen Spannung (Uₘₐₓₜ) zu laden, mit der die zweite Energiespeichervorrichtung (5; 11b) beaufschlagt werden kann.

11. Verfahren nach einem der Ansprüche 9 und 10,
**dadurch gekennzeichnet, dass** in der Betriebsart, in der die Brennkraftmaschine arbeitet, die Spannungen in dem Niederspannungsnetz und in dem Hochspannungsnetz (1, 2) auf jeweilige Basiswerte (U_{flb}, U_{fls}) der Energiespeichervorrichtungen reguliert werden.

12. Verfahren nach einem der Ansprüche 9 bis 11,
**dadurch gekennzeichnet, dass** es in dem Fall, in dem das Fahrzeug mit einem automatischen Neustartsystem ausgerüstet ist, darin besteht,
einen Wert (U_{mintc}), der für die minimale Spannung des Hochspannungsnetzes (2) beachtet werden muss, als Funktion der Betriebstemperatur der Brennkraftmaschine festzulegen und
bei einem vorübergehenden Stoppen des Fahrzeugs bei angehaltener Maschine die Spannung des Hochspannungsnetzes (2) allmählich zu verringern, bis der zu beachtende Wert der Spannung (U_{mintc}) erreicht ist, indem Energie von der ersten Speichervorrichtung (3; 11a) zu der zweiten Speichervorrichtung (5; 11b) über den Wandler (4) übertragen wird.
